# EUROPÄISCHE PATENTANMELDUNG

(11) **EP 1 369 839 A1**
(43) Veröffentlichungstag der Anmeldung: **10.12.2003**
(21) Anmeldenummer: 02405445.4
(22) Anmeldetag: 03.06.2002
(51) Int. Cl.: G09B 21/00, A61F 9/08, H04M 1/247

(54) **Prozessorbasiertes Verfahren und System zur Audioalisierung von graphischen Daten**

(71) Anmelder: Swisscom Mobile AG, 3050 Bern (CH)
(72) Erfinder: Lauper, Eric, 3014 Bern (CH); Busch Lauper, Karin, 3014 Bern (CH)
(74) Vertreter: BOVARD AG - Patentanwälte

(57) **Zusammenfassung**

Verfahren und System zur Audioalisierung von Graphiken, wobei graphische Darstellungen in akustische Entsprechung umgewandelt werden, indem basierend auf den Farben und/oder Graustufen einer Graphik eine korrespondierende Bitmap-Matrix (40) berechnet wird, jeder Zeile der Bitmap-Matrix (40) jeweils eine bestimmte Klanghöhe und/oder ein bestimmtes Klangmuster zugeordnet wird, und die Matrixelemente (10) der Bitmap-Matrix (40) als Kombination der entsprechenden Klänge und/oder Klangmuster wiedergegeben werden. Insbesondere betrifft die Erfindung ein Verfahren und System, bei welchem die Graphiken Ziffern und/oder Buchstaben und/oder Symbole umfassen, beispielsweise bei SMS-Nachrichten in der Mobilfunktelephonie. U.a. kann die Erfindung als Vorrichtung für Sehbehinderte und Blinde zur Unterstützung bei der Erfassung graphischer Darstellungen dienen.

## Beschreibung

Die vorliegende Erfindung betrifft ein Verfahren und System zur Audioalisierung von Graphiken, wobei graphische Darstellungen in akustische Entsprechung umgewandelt werden. Insbesondere betrifft die Erfindung ein Verfahren und System, bei welchem die Graphiken Ziffern und/oder Buchstaben und/oder Symbole umfassen, beispielsweise bei SMS-Nachrichten in der Mobilfunktelephonie. U.a. kann die Erfindung als Vorrichtung für Sehbehinderte und Blinde zur Unterstützung bei der Erfassung graphischer Darstellungen dienen.

Hintergrund der Erfindung bilden die Zugriffsmöglichkeiten auf Informationen, insbesondere aber graphisch erfasste Informationen, z.B. für Blinde und stark Sehbehinderte. Während textbasierende Informationen entweder auf Tonträgern oder taktil erfassbaren Medien eine Hauptrolle bei der Informationsübermittlung an Blinde spielen, treten demgegenüber Bild- und graphische Informationen stark zurück. Als Grund hierfür ist vor allem anzugeben, dass für Blinde graphische Informationen nur schwer, falls überhaupt, oder nur mittels komplizierter Apparaturen zugänglich ist. Eine Möglichkeit im Stand der Technik ist die Erzeugung von sogenannten Taktilgraphiken, jedoch hat die automatische Erzeugung von Taktilgraphiken zu diesem Zweck noch keine weite Verbreitung gefunden. Zum Thema "Taktilgraphiken" ist zu erwähnen, dass als Trägermedium in der Hauptsache Papier zum Einsatz kommt, da verschiedene Entwicklungen im Bereich taktiler elektronischer Graphik-Arrays bisher keine kostengünstigen und gleichzeitig zuverlässigen Lösungen hervorgebracht haben. Dies gilt insbesondere für die Speicherung und portable Nutzung von taktilen Graphiken, wo Papier anderen Medien, wie z.B. der sogenannten "Schwellfolie" in wirtschaftlicher Hinsicht überlegen ist.

Als weiterer Hintergrund ist seit dem Aufkommen der Mobilfunktechnologie und dem Internet eine grosse Bandbreite an verschiedenen Kundendiensten über Telekommunikationsnetze, insbesondere das Internet, das öffentliche geschaltete Telefonnetz und/oder Mobilfunknetze entstanden. Beispiele dafür sind das Bestellen von Waren übers Internet, das elektronische Bezahlen von Waren oder das Abfragen von Datenbanken (Kontostand, Börsenkurse etc.), beispielsweise via SMS (Short Message Services), IVR (Interactive Voice Response) oder Web-Interface. Um Text hörbar zu machen, gibt es im Stand der Technik verschiedene Verfahren, wie z.B. Text-to-Speech etc. Alle gängigen Text-to-Speech Verfahren benötigen jedoch Rechenleistungen, die die Kapazität der Rechenleistung, welche in einem Mobilfunktelefon zur Verfügung steht, weit übersteigen. Somit sind Dienstleistungen, die z.B. über SMS angeboten werden, für Blinde und stark Sehbehinderte nicht einfach nutzbar. Werden Graphiken übermittelt, gibt es im Stand der Technik ebenfalls verschieden Verfahren, wie sie für Blinde und stark Sehbehinderte mittels Computer zugänglich gemacht werden können. Ein Beispiel dazu zeigt die deutsche Offenlegungsschrift DE 19624402 A1 mit einer computergestützten Interaktionsvorrichtung für Blinde und Sehbehinderte. Es ist jedoch klar, dass solche Vorrichtungen gänzlich für die Mobilfunktechnologie und andere mobile Netzwerktechnologien ungeeignet sind. Dies betrifft insbesondere den Bedarf an Rechenleistung und Energie, als auch die benötigte Grösse der Vorrichtung.

Ebenfalls als Hintergrund ist zu erwähnen, dass zusammen mit dem genannten Aufkommen der Mobilfunktechnologie, WLANs und Internet auch das Sicherheitsbedürfnis für Benutzer und Dienstanbieter solcher Netze immer grösser wurde. Dies betrifft zum einen die Benutzererkennung auf Seiten der Dienstanbieter, aber auch umgekehrt die Identifikation eines Dienstanbieters durch den Benutzer. Dies ist überall dort wichtig, wo ein Vertrauensverhältnis zwischen einem Benutzer und einem Dienstanbieter besteht. Für die Benutzererkennung gibt es im Stand der Technik viele Verfahren, wie z.B. die Eingabe eines Benutzernamens (Username) und eines Passwortes oder Eingabe eines Identifikationcodes einer Streichliste zusammen mit einem persönlichen Identifikationcode etc. Diese helfen aber nur dem Dienstanbieter einen Benutzer zu identifizieren und nicht einem Benutzer, einen bestimmten Dienstanbieter zu erkennen. Im Stand der Technik sind weiter sog. digitale Unterschriften bekannt, mittels welchen Daten allgemein, aber z.B. auch Authentifikationsdaten authentifiziert werden können. Der Benutzer fügt seine digitale Unterschrift den Authentifikationsdaten bei, wobei die digitale Unterschrift mittels eines geheimen privaten Schlüssels erzeugt wird. Die digitale Unterschrift kann dann mit einem öffentlichen Schlüssel, der mathematisch mit dem privaten Schlüssel verknüpft ist, auf seine Authentizität überprüft werden. So lassen sich beliebige Daten basierend auf den beiden Schlüsseln chiffrieren und dechiffrieren. Digitale Unterschriften können sowohl von Benutzern, als auch von Dienstanbietern zur Identifikation verwendet werden. Die digitale Unterschrift ist jedoch ein verhältnismässig kompliziertes und aufwendiges Verfahren und eignet sich für einfach, schnelle Erkennungen wenig. Als letztes Beispiel einer Identifizierungsmöglichkeit sei hier die Verwendung einer Identifizierungskarte aufgeführt, wie sie z.B. in der Mobilfunktechnologie weit verbreitet ist. Bei der Identifizierungskarte kann es sich z.B. um Chipkarten, wie eine SIM-Karte (Subscriber Identity Module) oder Smart-Cards handeln. Auf diesen Karten befindet sich in einem geschützten und für den Benutzer nicht zugänglichen Speicherbereich ein Identifikationscode, der als zusätzliches Authentifikationsmerkmal dienen kann. Mit einer solchen SIM-Karte kann das Gerät, in welchem die SIM-Karte verwendet wird, eindeutig identifiziert werden und einem Benutzer zugeordnet werden. Im Mobilfunkbereich wird so als Identifikation der Chipkarte z.B. eine der Chipkarte zugeordnete MSISDN (Mobile Subscriber ISDN), d.h. die Rufnummer und/oder eine IMSI (International Mobile Subscriber Identification) verwendet werden. Typischerweise ist die IMSI in einem geschützten Speicherbereich der SIM-Karte gespeichert und wird über ein HLR (Home Location Register) oder ein VLR (Visitor Location Register) der entsprechenden MSISDN zugeordnet. Auch dieses Verfahren ist für viele Anwendungen jedoch zu kompliziert und hilft zwar, dem Dienstanbieter einen Benutzer zu identifizieren, aber nicht umgekehrt.

Es ist eine Aufgabe dieser Erfindung, ein neues Verfahren und System zur Audioalisierung von Graphiken vorzuschlagen, welches die oben beschriebenen Nachteile nicht aufweist. Insbesondere soll dem Benutzer eine einfache und schnelle Möglichkeit geboten werden, einen Dienstanbieter zu erkennen, ohne dass die komplizierte Verwendung von digitalen Unterschriften etc. nötig ist. Weiter soll Blinden und stark Sehbehinderten eine Möglichkeit geboten werden, Graphiken und/oder Logos und/oder Symbole und/oder Buchstaben einfach über das Gehör wahrzunehmen. Die Möglichkeit der rechenaufwendigen Text-to-Speech Verfahren bietet sich bei allgemeinen Graphiken, Bildern und/oder Symbolen sowieso nicht. Ebenfalls dazu soll die Erfindung eine z.B. in Mobilfunkgeräten einsetzbare Lösung bieten.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass in einem prozessorbasierten Verfahren oder System basierend auf den Farben und/oder Graustufen einer Graphik eine korrespondierende Bitmap-Matrix erstellt und/oder berechnet wird, dass jeder Zeile der Bitmap-Matrix jeweils eine bestimmte Klanghöhe und/oder ein bestimmtes Klangmuster zugeordnet wird, und dass die Matrixelemente der Bitmap-Matrix als Kombination der entsprechenden Klänge und/oder Klangmuster wiedergegeben werden, wobei die Spaltenabfolge der Bitmap-Matrix ihre zeitliche Wiedergabe bestimmt. Die Graphik kann Ziffern und/oder Buchstaben und/oder Symbole umfassen, insbesondere auch Unterschriften und/oder persönliche Erkennungsmuster und/oder Firmenlogos. Als Ausführungsvariante liegt bereits eine Bitmap vor. In diesem Fall wird diese Bitmap direkt als Bitmap-Matrix erfasst und/oder erstellt ohne dass erste eine Graphik umgeweandelt werden müsste. Die oben erwähnte Ausführung hat den Vorteil, dass Text, z.B. in Form von SMS, und/oder Logos und/oder Graphiken leicht hörbar gemacht werden können, ohne dass dabei eine ähnlich grosse Rechenleistung, wie z.B. bei Verfahren wie Text-to-Speech Verfahren, notwendig wäre. Insbesondere können für Blinde oder stark Sehbehinderte SMS und/oder graphische Nachrichten und/oder graphische Dienstanbietererkennungen leicht audioalisiert oder hörbar gemacht werden.

In einer anderen Ausführungsvariante bestimmt ein oder mehrere Ausleseelemente die zeitliche Wiedergabe der Matrixelemente in der Spaltenabfolge. Diese Ausführungsvariante hat u.a. den Vorteil, dass entsprechend der Form des Ausleseelementes verschiedene Spalten unterschiedlich in der Zeitachse angesprochen werden können. Insbesondere können bei mehreren, gleichzeitig in der Zeitachse t bewegten Ausleseelemente weitere Erkennungsmöglichkeiten erreicht werden. Es muss darauf hingewiesen werden, dass im Falle von mehreren Ausleseelementen, sie nicht unbedingt synchron in der Leseachse bewegt werden müssen, u.a. auch können sie sogar in umgekehrter Richtung zueinander bewegt werden. Zeitlich direkt aufeinanderfolgend ausgelesene Bitmappunkte gleicher Zeile können als einzelne Känge und/oder Klangmuster und/oder als verbundener Klang und/oder Klangmuster wiedergegeben werden.

In einer weiteren Ausführungsvariante weist das Ausleseelement eine gerade Form auf. Diese Ausführungsvariante hat u.a. den Vorteil, dass das Auslesen der Matrixelemente, d.h. Klangelement in den Spalten der Matrix spaltenweise erfolgt. Dies entspricht der einfachsten Auslesemöglichkeit.

In einer weiteren Ausführungsvariante weist das Ausleseelement eine konkave oder konvexe Form auf. Diese Ausführungsvariante hat u.a. den Vorteil, dass das Auslesen der Spalten nicht jeweils nur spaltenweise erfolgen kann, sondern gemäss der Form entsprechend spaltenübergreifend.

In einer Ausführungsvariante wird eine SMS als Graphik erfasst und audioalisiert wiedergegeben. Dies hat den Vorteil, dass der Benutzer eine einfache Alternative zur rein visuellen Erkennung erhält, ohne dass dabei viel Rechenleistung benötigt wird. Dies ist folglich u.a. speziell für Blinde und stark Sehbehinderte beim Lesen von SMS mittels eines Mobilfunkgerätes sinnvoll.

In einer anderen Ausführungsvariante wird ein elektronischer Fax als Graphik erfasst und audioalisiert wiedergegeben. Dies kann z.B. dadurch geschehen, dass Teile des Faxes zur Audiolisierung identifiziert werden, beispielsweise durch Einteilen des Faxes in mehrere Zeilen, und als diese Teile audioalisiert werden. Diese Ausführungsvariante hat u.a. die gleichen Vorteile wie die vorhergehende.

In einer weiteren Ausführungsvariante wird zur Audioalisierung und/oder Wiedergabe der audioalisierten Graphik ein Mobilfunkgerät verwendet. Diese Ausführungsvariante hat u.a. die gleichen Vorteile wie die vorhergehende, d.h. sie kann u.a. zur Unterstützung von Blinden oder stark Sehbehinderten beim Benutzen von Text-Meldungen oder Erkennungsgraphiken bei Mobilfunkgeräten sein.

In einer weiteren Ausführungsvariante wird mittels einer Kamera und/oder Scanneinheit die Graphik erfasst. Dies hat u.a. den Vorteil, dass das Verfahren und/oder System als Erkennungshilfe für Blinde und/oder stark Sehbehinderte benutzt werden kann, wobei der Benutzer nicht auf den elektronischen Zugriff auf die Graphik angewiesen ist.

In einer anderen Ausführungsvariante bestimmen die Graustufen der Graphik die Klangstärke und/oder Klangfarbe, während die Farbtöne der Graphik das Klangmuster und/oder die Klanghöhe bestimmen. Ebenso ist es möglich, dass die Farbtöne der Graphik die Klangstärke und/oder Klangfarbe bestimmen, während die Graustufen der Graphik das Klangmuster und/oder die Klanghöhe bestimmen. Dies hat u.a. den Vorteil, dass verschiedene Resultate im Klangbild zu einer einfachen Erkennung der Graphik führen können

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch das Umsetzten einer Textgraphik, wie z.B. einer SMS, in eine korrespondierende Bitmap-Matrix 40 zeigt. In dem Ausführungsbeispiel wurden die Zeilen 1,...,7 der gewohnten Dur-Tonleiter (z.B. C-Dur: C, D, E, F, G, A und H) zugeordnet.
Figur 2 zeigt zwei Blockdiagramme, welche ebenfalls schematisch das Auslesen der Matrixelemente 10 mittels eines Ausleseelementes 20 zeigen, wobei das Ausleseelement 20 eine gerade Form hat und sich in der Ausleserichtung t bewegt. Damit werden die Elemente 10 der Bitmap-Matrix 40 spaltenweise 30 ausgelesen.
Figur 3 zeigt zwei weitere Blockdiagramme, welche ebenfalls schematisch das Auslesen der Matrixelemente 10 mittels eines Ausleseelementes 21 zeigen, wobei das Ausleseelement 21 eine gerade Form hat, jedoch sich in einem bestimmbaren Winkel zur Ausleseachse t bewegt.
Figur 4 zeigt zwei Blockdiagramme, welche ebenfalls schematisch das Auslesen der Matrixelemente 10 mittels eines Ausleseelementes 22 zeigen, wobei das Ausleseelement 22 eine konkave bzw. konvexe Form hat und sich in der Ausleserichtung t bewegt.
Fig. 5 zeigt eine Darstellung der 10 Oktavenintervalle im hörbaren Bereich des Menschen in der üblichen Darstellung im Violinschlüssel, wobei der Ton A die übliche Frequenz von 440 Hertz des Kammertons besitzt.
Fig. 6 zeigt eine herkömmlich vordefinierte Zuweisung von Tonmuster z.B. zu Teilen des ASCII-Codes.
Fig. 7 zeigt das Umwandeln des Alphabets in eine Bitmap-Matrix 40 am Beispiel einer 3x3 Bitmap-Matrix 40.
Fig. 8 zeigt das Auftreten unterschiedlicher Erkennungsmuster für den gleichen Buchstaben ("E"), wie sie vom erfindungsgemässen Verfahren ebenfalls audioalisiert werden können.

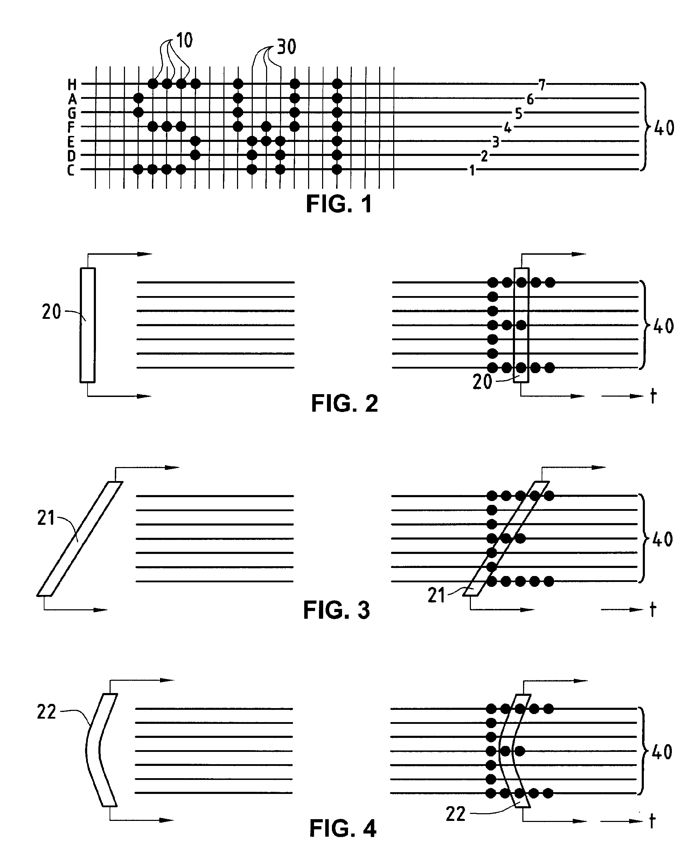

Figur 1 illustriert eine Bitmap, wie sie bei der Realisierung der Erfindung zum Audioalisieren einer Graphik verwendet werden kann. In diesem Ausführungsbeispiel wird basierend auf den Farben und/oder Graustufen einer Graphik eine korrespondierende Bitmap-Matrix 40, z.B. mittels eines Analysemoduls, berechnet. Die Graphik kann Ziffern und/oder Buchstaben und/oder Symbole umfassen, insbesondere auch Unterschriften und/oder persönliche Erkennungsmuster und/oder Firmenlogos. So lassen sich z.B. insbesondere SMS-Meldungen und/oder elektronische Faxe mittels des erfindungsgemässen Verfahrens audioalisieren. Die Graphik kann mittels einer Kamera und/oder Scanneinheit erfasst werden und auf einem Speichermodul zwischengespeichert werden. Es ist aber auch möglich, dass die Graphik an das erfindungsgemässe, prozessorbasierte System zur Audioalisierung über eine Verbindung von anderen Systemen, beispielsweise über ein Netzwerk, übermittelt wurde. Eine solche Verbindung kann Kommunikationsnetze, wie beispielsweise ein Mobilfunknetz, wie ein terrestrisches Mobilfunknetz, z.B. ein GSM- oder UMTS-Netz, oder ein satellitenbasiertes Mobilfunknetz, und/oder ein oder mehrere Festnetze, beispielsweise das öffentlich geschaltete Telefonnetz (PSTN: Public Switched Telephone Network) und/oder ISDN (Integrated Services Digital Network) oder ein geeignetes LAN (Local Area Network) oder WAN (Wide Area Network) umfassen. Das erfindungsgemässe System kann z.B. als ein Modul in eine mobile Netzwerkeinheit oder einen sog. mobilen Node z.B. Laptops, Notebooks, PDAs (Personal Digital Assistant) oder Mobilfunkgeräte, insbesondere Mobilfunktelefone integriert sein. Es kann sich aber auch um einen normalen PC (Personal Computer) o.ä. handeln. Bei mobilen Netzwerkeinheiten, können die Systeme mit einer entsprechenden Schnittstelle hard- und softwaremässig ausgestattet sein, um sie in ein lokales drahtloses Computernetzwerk (WLAN) oder z.B. im Fall eines Mobilfunkgerätes in das PLMN (Public Land Mobile Network) bzw. in das PSTN (Public Switched Telephone Network) einzubinden. Über das PLMN/PSTN können die Systeme insbesondere Zugriff auf das weltweite Computer Backbone-Netzwerk wie das Internet haben. Die software- und/oder hardwaremässige Schnittstelle kann z.B. einen Adapter umfassen, welcher einen Sender/Empfänger sowie eine Kontrollkarte umfasst (wie z.B. Infrarot(IR)-Adapter oder einen Tieffrequenzradiowellen-Adapter etc.). Mobile Systeme können zur Anbindung an die erwähnten Netzwerke z.B. mittels Radiofrequenzsignalen mit sog. Access Points (WLANs) oder sog. BTS (Base Tranceiver Station) (Mobilfunknetzwerken) kommunizieren. Über die Schnittstelle kann die Übermittlung der Graphik z.B. mittels eines TCP/IP-lnterface und/oder CORBA-Interface, eines ATM-Moduls, eines SMS- und/oder USSD-Gateways mittels speziellen Kurzmeldungen, beispielsweise SMS- (Short Message Services), MMS- (Multimedia Messaging Services), USSD- (Unstructured Supplementary Services Data) Meldungen oder andere Techniken wie MExE (Mobile Execution Environment), über Protokolle wie GPRS (Generalized Packet Radio Service), WAP (Wireless Application Protokoll) oder über einen Nutzkanal erfolgen. Das Analysemodul kann ebenfalls hardwaremässig und/oder softwaremässig ausgeführt sein und ein Speichermodul zum Speichern der Graphik und/oder der Bitmap-Matrix 40 umfassen. Jede Zeile 1,...,7 der Bitmap-Matrix 40 wird jeweils einer bestimmten Klanghöhe und/oder einem bestimmten Klangmuster zugeordnet. Die Matrixelemente 10 der Bitmap-Matrix 40 werden als Kombination der entsprechenden Klänge und/oder Klangmuster mittels eines Ausleseelementes 20/21/22 wiedergegeben, wobei die Spaltenabfolge 30 der Bitmap-Matrix 40 ihre zeitliche Wiedergabe bestimmt. Als Ausführungsvariante ist es auch vorstellbar und kann insbesondere zur Wiedergabe komplexerer Graphiken vorteilhaft sein, dass mehrere Ausleseelemente 20/21/22 die zeitliche Wiedergabe der Matrixelemente 10 in der Spaltenabfolge 30 gleichzeitig bestimmen. Das Ausleselement 20/21/22 kann z.B. gerade Form 20/21 (Figur 2 und 3), konkave oder konvexe Form 22 (Figur 4) etc. besitzen. Aber auch andere, beliebige Formen, wie z.B. eine S-Form sind vorstellbar. Bei der Wiedergabe werden jeweils die Elemente der Bitmap-Matrix ausgelesen, welche vom Ausleseelement (Balken 20/21/22) erfasst werden. Das Ausleseelement 20/21/22 kann hardware- und/oder softwaremässig realisiert sein und greift auf die Bitmap-Matrix 40 zu, welche z.B. im genannten Speichermodul gespeichert ist. Die Wiedergabe der Klänge und/oder Klangmuster kann z.B. mit einem mikrotuningfähige Synthesizermodulen geschehen, bei welchem jede Zeile 1,...,7 der Bitmap-Matrix auf eine beliebige Frequenz gestimmt werden kann. Als Ausführungsvariante umfasst dabei das Frequenzspektrum maximal alle 10 Oktaven des hörbaren Bereiches. Synthesizer dieser Art sind im Stand der Technik bekannt und können z.B. auf Systemen der Firma Yamaha beruhen. Beispiele dafür sind DX11, TX81Z, SY77, SY99, DX7II sowie auch QY 300 und andere.

Jede Zeile 1 ,...,7 der Bitmap-Matrix 40 wird wie erwähnt jeweils einer bestimmten Klanghöhe und/oder einem bestimmten Klangmuster zugeordnet. In Fig. 1 wurde die Zuordnung der einzelnen Zeilen 1,...,7 zu Klängen als Beispiel mittels der bekannten achtstufigen Dur-Tonleiter (hier C-Dur, bestehend aus C, D, E, F, G, A und H) gemacht. D.h. Matrixelemente 10 der untersten Zeile 1 erzeugen einen C-Ton, Matrixelemente 10 der zweituntersten Zeile 2 einen D-Ton etc., wenn sie über das Ausleseelement ausgelesen werden. Der A-Ton (Zeile 6 der Bitmap-Matrix 40) kann beispielsweise auf die üblichen 440 Hertz der Frequenz des Kammertons gestimmt sein. Jede andere Frequenz im hörbaren Bereich ist jedoch ebenso möglich. In Fig. 1 würden entsprechend der Dur-Tonleiter Matrixelemente 10 der achten Zeile der Oktave entsprechen und somit mit dem 1. Oberton der Obertonreihe eine erste natürliche Intervallbildung ergeben. D.h. Zeile 8 (nicht gezeigt) würde im Beispiel von Figur 1 durch Verdoppelung des Zahlenwerts der Zeile 1 entstehen. Ist beispielsweise die Frequenz des Orientierungstones (Zeile 1) auf 136,1 Hertz festgelegt worden, so muss diese Frequenz verdoppelt werden um den 1. Oberton zu erhalten. 136,1 X 2 = 272,2 Hertz. Umgekehrt ist in gleicher Art für Zeile 8 auch das Gegenstück des 1. Obertones der Obertonreihe also der 1. Unterton der Untertonreihe möglich. Die Frequenzzahl (bei Normierung auch Tonzahl genannt) des Haupttones (Zeile 1) muss hierzu halbiert werden. Man erhält den Zahlenwert ½ der Zeile 1. Die Frequenzberechnung im vorgenannten Beispiel ergibt: 136, 1/2 = 68,05 Hertz. Gleichzeitig würde sich die angegebene Reihenfolge der Töne (C, D,...) entsprechend umkehren. Der 1. Oberton bildet sich also durch Verdoppelung 2/1, der 1. Unterton durch Halbierung 1/2. Der 1. Oberton und der 1. Unterton sind daher durch die Zahlen 1 und 2 mit dem Bezugston (z.B. Zeile 1, Fig. 1) verknüpft und bestimmen einen ersten Intervallraum in der Bitmap-Matrix 40.

Allgemein lässt sich sagen, dass im Falle der Zuordnung von Tönen zur Bitmap-Matrix 40 der 1. Oberton genauso wie der 1. Unterton jeweils einen Oktavraum umschliesst. Eine Oberoktave ergibt sich natürlicherweise wie erwähnt durch Verdoppelung einer Frequenz, eine Unteroktave durch Halbierung einer Frequenz. Die Oberoktave des Orientierungstones mit der Tonzahl 1 hat den Zahlenwert 2/1, die Unteroktave den Zahlenwert 1/2. Die Oktave ist bei der Wahrnehmung als das konsonanteste Intervall bekannt. Definiert man die Oktave also aus der Verdoppelung oder Halbierung einer Bezugsfrequenz, so leitet sich hieraus eine starke Ähnlichkeit vom Orientierungston beziehungsweise Bezugston (im Beispiel von Fig. 1 ist dies Zeile 1) ab. Der Verschmelzungsgrad beider Töne bei der Wahrnehmung ist grösser als bei jedem anderen Intervall. Dies kann für die Unterscheidbarkeit verschiedener Töne und/oder Klänge in einem Klangmuster von Bedeutung sein. Der Zusammenhalt der Oktave ist für das menschliche Gehör derart stark, dass die Oktave das allerwesentlichste konstituierende Intervall der Musik darstellt. Die Oktave bildet dadurch in aller Regel das Rahmenintervall der Musik, in welches die anderen Töne eingebettet sind. Oktavintervalle sind deshalb bei der Zuordnung von Klängen und Tönen an die Zeilen 1,...,7 der Bitmap-Matrix 40 besonders zu beachten, falls das Klangspektrum den Oktavenraum (Verdoppelung oder Halbierung der Frequenz des Orientierungstones) überschreitet.

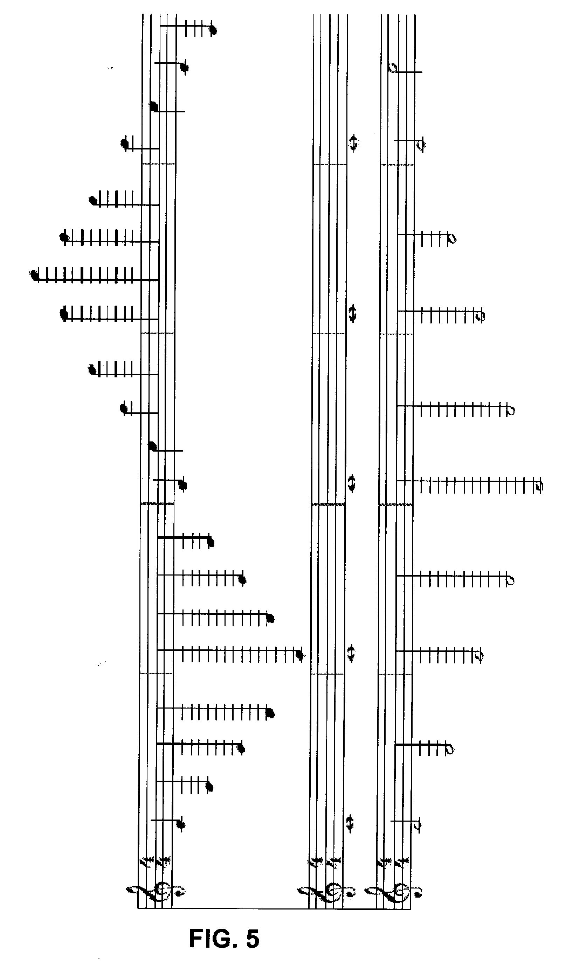

Fig. 5 zeigt den Ton C im gesamten hörbaren Tonraum und ist in der üblichen Darstellung im Violin-Schlüssel gezeigt. Durch die Oktavintervalle ergibt sich eine natürliche Durchstrukturierung des Tonraumes, d.h. des hörbaren Frequenzbereiches. Eine Möglichkeit der Zuordnung der Oktaven auf die Bitmap-Matrix 40 kann z.B. mittels eines Verfahren von Hans Cousto erreicht werden, welches durch Oktavierung Frequenzen berechnet, die Oktavengerüste im hörbaren Bereich erzeugen und welche Frequenzen ebenfalls mit geeignetem Gerät darstellbar sind (z.B. MIDI-Geräten). Nimmt man als Orientierungston den heutigen Kammerton mit 440 Hertz, so ergibt sich: 440:2 = 220, 220:2 = 110, 110:2 = 55, 55:2 = 27.5, 27.5:2 = 13.75 Hertz. Nach 5 Teilungen ergibt sich als fünfte Unteroktave 13.75 Hertz. Der hörbare Bereich beginnt bei etwa 16 Hertz. In Richtung Oberoktaven ergibt sich 440x2 = 880x2 = 1760x2 = 3520x2 = 7040x2 = 14080x2 = 28160. Die sechste Oberoktave des Kammertones liegt bei 28160 Hertz. Aus dieser Rechnung ergibt sich, dass sich der hörbare Bereich in ein Oktavengerüst von ca. 10 Oktaven einteilen lässt.

Die bekannte achtstufige Tonleiter zeigt eine Möglichkeit einer weiteren Intervallbildung und damit einer möglichen Zuordnung von Klangintervallen an die Zeilen 1,...,7 einer Bitmap-Matrix 40. Der Term Oktave leitet sich nicht von den Zahlenwerten 1 und 2 ab, d.h. nicht aus ihrer Definition als verdoppelte oder halbierte Frequenz, sondern von 8. Wie bereits ausgeführt, ist damit der achte Ton einer Intervallbildung zwischen dem Orientierungston (Prim) und der verdoppelten oder halbierten Frequenz (Oktave) gemeint, was der üblichen achtstufigen Tonleiter entspricht. Um eine Zuordnung der Bitmap-Matrix 40 wie in Fig. 1 zu erhalten, müssen 6 weitere Töne bzw. Intervalle gebildet werden. Wie erwähnt wurde in Fig. 1 die Intervalle als Beispiel gemäss der im westlichen Raum gewohnten achtstufigen Tonleiter gewählt. Dies soll jedoch nur als Beispiel für das erfindungsgemässe Verfahren und System dienen und ist in keiner Weise einschränkend auf den Schutzbereich der Erfindung gedacht. Wie weiter unten ausgeführt wird, sind andere Zuordnungen nicht nur möglich, sondern für viele Ausführungsvarianten sinnvoller. Ordnet man im Beispiel von Fig. 1 dem Orientierungston den Frequenzwert 1 zu (d.h. normiert man das Frequenzspektrum mit der Frequenz des Orientierungstons; hier Zeile 1 in der Bitmap-Matrix 40 von Fig. 1), hat die Oberoktave immer den Wert 2. Vom Orientierungston zur Oberoktave hin kann eine aufsteigende Scala gebildet werden. Die 6 Töne, mit denen der Oktavraum ausgestattet wird, müssen daher einen Frequenzwert besitzen, der auf jeden Fall >1 und <2 ist.

Wie mit Experimenten klar wird, hängt Unterscheidbarkeit und Harmonieverständnis bei der Wahrnehmung von Klängen und Klangmuster stark von der Wahl der Intervalle ab. Dies ist wichtig für die Zuordnung der Klänge und/oder Klangmuster zur Bitmap-Matrix 40. Offensichtlich kann das menschliche Hirn Klangkombinationen einer Intervallbildung beruhend auf ganzzahligen Frequenzzahlenverhältnissen einfacher, schneller und sicherer unterscheiden. Dies kommt in den Harmonien der westlichen Musik auf natürliche Weise zum Ausdruck. Mit den Zahlwerten 1 und 2 lassen sich ausser den Oktavbeziehungen keine weiteren Intervalle bilden. Betrachtet man die auf 1 und 2 folgende Zahl 3, so können mit ihrer Hilfe die 6 Innentöne der Oktave der achtstufigen Tonleiter gebildet werden. Dies entspricht der Erfahrung, dass das Hörverständnis und die Unterscheidbarkeit bei komplexeren Zahlenverhältnissen der Intervallbildung rasch abnimmt. Folglich muss mit der Zahl 3 in Kombination mit 1 und/oder 2 ein Frequenzwert gebildet werden, der >1 und <2 ist. Bei den absteigenden Tonleitern geht die Skala vom Orientierungston aus zur Unteroktave hin. Deren Wert ist 1/2. Folglich müssen umgekehrt bei der Bildung des Intervalls einer Unteroktave dann die Umrechnungen der Ausgangszahlen einen Wert zwischen >0,5 und <1 annehmen. Es ist klar, dass allein durch die Kombination von Verdoppelung und/oder Halbierung sich stets eine Frequenzverhältniszahl (d.h. das Verhältnis der Frequenzen zueinander) in den Intervallen >1 und <2 oder >0,5 und <1 bilden lässt. Das Beispiel von Fig. 1 und der achtstufigen Tonskala ergibt sich nun wie folgt: Die Halbierung der Zahl 3, ihre Oktavierung, entspricht einer Teilung durch die Zahl 2. Es ergibt sich der Wert 3/2. Dieser Wert ist in die aufsteigende Tonskala einsetzbar, er ist >1 und <2. Eine weitere Oktavierung ergibt den Wert 3/4. Er ist >0,5 und <1. Ein erstes Intervall, das durch die Zahl 3 gezeugt wird, ist damit gewonnen. Ausgehend vom Orientierungston (Zeile 1 in Fig. 1) mit dem Wert 1 erfolgt eine Multiplikation mit dem Wert 3. 1x3=3. Anschliessend erfolgt die Oktavierung und der Tonwert ist 3/2. Man erhält nun eine komplette, achtstufige Tonskala, die nur aus der Zahl 3 gebildet wird, indem man folgende Reihe bildet:
1x3 = 3, 3x3 = 9, 9x3 = 27, 27x3 = 81, 81x3 = 243, 243x3 = 729.

Die erhaltene Zahl wird jeweils wieder mit 3 multipliziert und man erhält folgende Zahlen: 3, 9, 27, 81, 243 und 729. Es ist zu beachten, dass für die Intervallbildung in diesem Beispiel nur die Zahl 3 verwendet wurde. Jede genannte Zahl muss so oft oktaviert werden, bis sie in das Intervall 1 < x < 2 passt. Das ergibt folgende Werte:
3/2, 9/8, 27/16, 81/64, 243/128 und 729/512.

Natürlich kann man auch die Zahl 6, 12, 24 und weitere Verdoppelungen (Oktavierungen) anstelle der Zahl 3 nehmen, ebenso 3/2, 3/4, 3/8, 3/16 und weitere Halbierungen (Oktavierungen), am Ergebnis, wie oben dargestellt, ändert dies aber nichts und die errechneten Intervalle bleiben dieselbe. Ebenso bleibt umgekehrt die Qualität der Tonscala erhalten, wenn man zunächst den Orientierungston (Zeile 1 in Fig. 1) mit dem Wert 1 immer wieder durch die Zahl 3 teilt, ebenso die Folgewerte und dann solange oktaviert, bis sie in einer Tonleiter mit dem Orientierungston als Spitzenton ihren Platz finden, d.h. die oktavierten Werte müssen >0,5 und <1 sein. Die Berechnung ergibt folgende Werte:
1:3 = 1/3, 1/3:3 = 1/9, 1/9:3 = 1/27, 1/27:3 = 1/81, 1/81:3 = 1/243, 1/243:3 = 1/729.

Die gefunden Werde lauten also: 1/3, 1/9, 1/27, 1/81, 1/243, 1/729. Jetzt wird so oft mit 2 zu multipliziert, bis die Werte in den Oktavraum mit dem Spitzenton 1 und der Unteroktave 0,5 passen. Es ergeben sich folgende Werte:
2/3, 8/9, 16/27, 64/81, 128/243 und 512/729.

Es ist zu beachten, dass zur Berechnung der Einstellungswerte für ein mikrotuning- ausgestattetes Synthesizermodul das Frequenzmuster z.B. bei der achtstufigen Tonleiter wie bei allen sog. schiefen Intervallbildungen innerhalb einer Prim und einer Oktave an den Zahlenwert 2 angepasst werden muss, falls die Zuordnung an die Bitmap-Matrix über eine Verdoppelung bzw. Halbierung, d.h. über den Zahlenwert 2 bzw. ½ hinausgeht. Diese Anpassung wird im Normalfall als Temperierung bezeichnet. Am Beispiel von Figur 1 bedeutet das, dass die erhaltenen Intervalle (lydische Tonskala) im reinen Frenquenzverhältnis (man spricht in der Musik von pythagoräischer Stimmung) 5 Ganztonschritte und zwei Halbtonschritte hat. Die Halbtonschritte liegen zwischen dem sog. Tritonus und Quinte sowie zwischen Septime und Oktave. Völlig fehlt in dieser Tonleiter der Quartbereich, da der letzte noch nicht genannte Ton im Tritonunsbereich des Quintbereiches liegt. Die erhaltenen Tonwerte lassen sich nun in logarithmische Werte umrechnen. Hierzu kann die im Stand der Technik bekannte Centrechnung verwendet werden. Jedem Halbton der gleichschwebend temperierten Stimmung wird 100 Cent zugeordnet, die Oktave hat 12 Halbtöne, also hat die Oktave insgesamt 1200 Cent. Das ist eine willkürliche Festlegung. Dagegen wird z.B. in einem Verfahren von Von Oettingen vorgeschlagen, die Oktave (d.h. die Verdoppelung der Frequenz) in 1000 Cent aufzuteilen. Bleibt man z.B. bei den 1200 Cent, berechnen sich die Frequenzwerte wie folgt: Der Centwert der Oktave kann durch den Logarithmus der Zahl 2 (0,30103...) geteilt werden und man erhält die Konstante 3986.3.... Mit dieser Konstante wird jeder errechnete Logarithmus multipliziert und man erhält den entsprechenden Centwert. Erstes Beispiel: Tonwert der Oktave = 2. logx = 0.30103. Der Centwert ist 0.30103 X 3986.3 = 1200 Cent. Als zweites Beispiel: Tonwert des Ganztones = 9/8. logx = 0.0511525. Der Centwert ist 0.0511525 x 3986.3 = 203.909 Cent. Die Berechnung der Einstellungswerte für das mikrotuning- ausgestattete Synthesizermodul ist bei anderen schiefen Unterteilungen der Oktavintervalle entsprechend auszuführen, wobei die Temperierung wie oben erwähnt nur eine Rolle spielt, falls die Einteilung der Bitmap-Matix 40 das Oktavintervall überschreitet. Im Stand der Technik lösen z.B. einige Synthesizer die Oktave (d.h. den Frequenzzahlenwert 2) in 768 Schritte (DX 11) auf, andere in 1024 Schritte (DX 7 II). Die Umrechnungskonstante bei 768 Schritten ist 2551.2, während sie bei 1024 Schritten 3401.7 lautet. Ein äquivalenter Weg, die Einstellungsdaten für das Synthesizermodul zu errechnen, besteht darin, den Centwert durch 1200 zu teilen und dann mit 768 oder 1024 zu multiplizieren. Bei anderen Ausführungsbeispielen ist das Verfahren analog durchzuführen. Am Beispiel der achtstufigen Tonleiter lässt sich jedoch erkennen, dass allein das Fehlen eines Tones im Quartbereich die Verwendungsfähigkeit einer solchen Tonleiter für erfindungsgemässe Ausführungsvarianten erheblich einschränken kann. Sie ist mit und ohne Tritonus eine sehr exzentrische oder schiefe Architektur. Bei solch schiefen Skalen kann das menschliche Gehör gezwungen sein zur genauen Unterscheidung einer Klangkombination weitere Oberschwingung dazuzunehmen. Dies kann die Klangbilderkennung für den Benutzer erschweren. Sind die Intervalle jedoch in den Harmonien genügend geschickt gewählt, z.B. durch Abstand der beiden Frequenzen und/oder der Wahl der Frequenzzahl bzw. Tonzahl zueinander, können solche schiefe Architekturen kompensiert werden.

Das Zusammenspiel von Cent-Rechnung und Synthesizermoduleinstellung lässt nun recht einfach Veränderungen gegebener Skalen zu, um schiefe Architekturen zu korrigieren und/oder an unterschiedliche Ausführungsvarianten anzupassen. Am Beispiel von Fig. 1 werden die gegebenen Intervalle aus der Zahl 3 ermittelt und zeigen Ganztonabstände von 204 Cent, sowie Halbtonabstände von 90 Cent. Im Folgenden soll gezeigt werden, wie basieren auf Temperierung die Intervalle in den Zeilen 1,...,7 der Bitmap-Matrix 40 angepasst werden können. Zum Beispiel kann als erster Schritt die Ganztonabstände Cent um Cent verringert werden, beispielsweise auf 202 Cent. Gleichzeitig vergrössern sich dann die Halbtonintervalle, in diesem Falle auf 95 Cent, da die Intervalle zusammen eine Oktave (in diesem Beispiel 1200 Cent) ausfüllen müssen. Verringert man die Ganztöne auf 200 Cent, wachsen die 2 Halbtöne auf 100 Cent. Dies würde der heute vorwiegend benutzten Stimmung, der gleichschwebende Temperatur, entsprechen. Der Tritonus ergibt hier 3 x 200 = 600 Cent, das ist der Neutralitätspunkt des Tritonus, sein neutrales Maximum. Senkt man die 5 Ganztonintervalle nun unter 200 Cent, vergrössern sich die Halbtonintervalle über 100 Cent. Der Tritonus, der sich ja aus drei Ganztönen zusammensetzt, wird dann kleiner als 600 Cent, er überschreitet dann denn Mittelpunkt der Oktave und den Neutralitätspunkt des Tritonus. Er gerät in den Bereich der Quarte, genauer der grossen Quarte, die den Quartanteil des Tritonus darstellt. Es ist klar, dass diese neue Intervallskala aber die Qualität der Zahl 3 verloren hat. Sie entspricht nach wie vor einer lydischen Tonscala, aber sie besitzt keine reinen Frequenzverhältnisse mehr. Die weitere Verringerung des Ganztonintervalles ist nur soweit sinnvoll, als weder der Ganzton-, noch der Halbton-, noch der Tritonusbereich verlassen werden. Wird eine dieser Grenzen überschritten, verliert die Skala ihre Intervallstruktur (hier lydisch), was ebenfalls zur Folge hat, dass die Zuordnung der Bitmap-Matrixelemente neu erfolgen müsste.

Es zeigt sich, dass Klänge und Töne, die zu nahe beieinander liegen, besonders in Klangkombinationen, vom menschlichen Hirn kaum mehr schnell und sicher unterschieden werden können. Als Ausführungsvariante bieten sich zum Audioalisieren von komplexeren Graphiken deshalb andere Intervallunterteilungen zwischen zwei ganzen Frequenzzahlen an. Geht man als Beispiel von der oben diskutierten achtstufigen Intervallbildung innerhalb einer Frequenzverdoppelung aus, wäre eine erste Vereinfachungsmöglichkeit z.B. eine pentatonische Intervallskala in den Zeilen 1,...,7 mit 5 Tönen ohne Halbtonschritte. Dadurch wird die Unterscheidung einer Kombination von Tönen bereits erheblich vereinfacht. Neben der Intervallgrösse zwischen zwei zu unterscheidenden Klängen kann z.B. ebenfalls die Berücksichtigung von Harmonien bei der Zuordnung der Bitmap-Matrix Zeilen zu den Klängen eine entscheidende Erleichterung der Unterscheidung bedeuten, um Graphiken für die Erkennung sinnvoll zu audioalisieren. Harmonien sind Frequenzverhältnisse mit für die menschliche Wahrnehmung besonders einprägsamen und angenehmen Frequenzmustern. Eine weitere Möglichkeit ist eine Berücksichtigung der Zeitfolge der Klänge und/oder Klangmuster bei der Zuordnung der Klangintervalle zu den Bitmap-Matrix Zeilen 1,...,7. Die Harmonien erzeugen in ihrer zeitlichen Folge ein weiteres Erkennungsmuster des Klangbildes, das heisst zusammen mit den Tonintervallen in einem Klang das Klangerlebnis als Ganzes. Dies kann zusätzlich bei der Erkennung von Klangmustern genutzt werden. In der Musik ist diese Erkennungsqualität ebenfalls bekannt. Zu ihrer Unterscheidung wurden Begriffe eingeführt wie z.B. die Tonarten etc. So kann u.a. bei einer F-Tonart z.B. unterschieden werden unter F-Dur, F-Moll, F-ionisch, F-dorisch, F-lydisch etc. Es kann sinnvoll sein, die Zuordnung für Ausführungsbeispiele mit bestimmtem Verwendungszweck speziell anzupassen. Betrifft eine solche Ausführungsvariante eine beschränkte Möglichkeit an unterschiedlichen Informationen, kann mit einer solchen Anpassung die Schnelligkeit und Einfachheit der Erkennung durch den Benutzer optimal angepasst werden. Bei der Anpassung lassen sich einfach Faktoren wie z.B. Farbspektrum, Graustuffen, Scharzweiss-Bild etc. berücksichtigen. Als Ausführungsvariante wird das Verfahren und System dazu genutzt, z.B. SMS-Nachrichten zu audioalisieren. In dieser Ausführungsvariante beschränkt sich die Menge der zu unterscheidenden Informationen z.B. auf den ASCII-Code (American Standard Code for Information Interchange) des ANSI (American National Standard Institute (1963/1968)). Damit beschränkt sich das Erkennungsbild auf 128 Zeichen bzw. 256 Zeichen, die maximal unterschieden werden müssen.

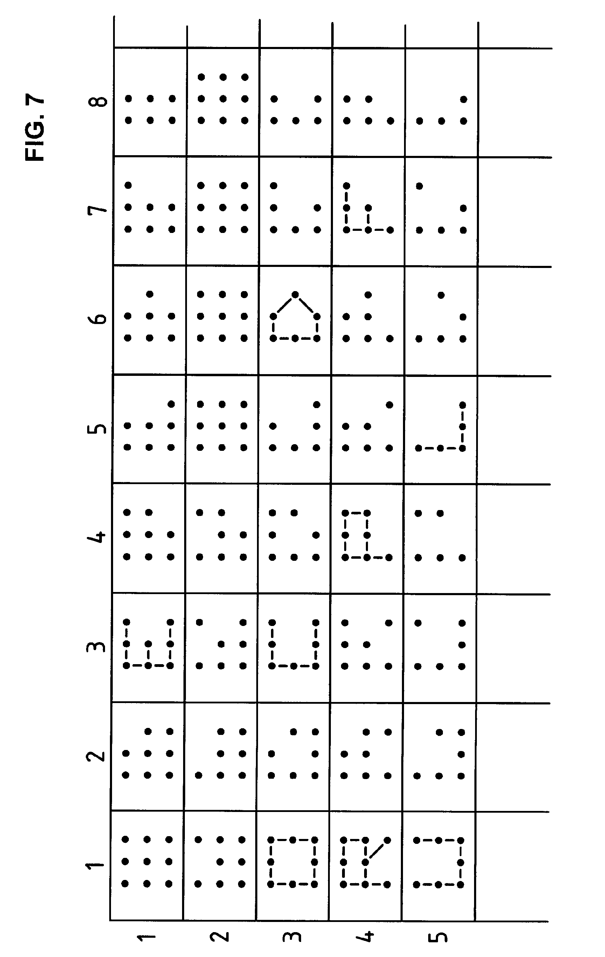

Figur 7 zeigt ein Beispiel einer solchen Erkennung. In Fig. 7 wurde als Ausführungsbeispiel in einem ersten Schritt die Bitmap-Matrix auf eine 3x3 Matrix beschränkt. Das Ausführungbeispiel wurde der Anschaulichkeit halber ebenfalls auf die Grossbuchstaben des Alphapeths eingeschränkt. In Fig. 7 wurden alle möglichen 3x3 Bitmap-Matrizen in systematischer Reihenfolge aufgetragen, so dass ähnliche Bitmap-Matrizen nebeneinander zu liegen kommen. Obwohl Figur 7 nur einen kleinen Teil aller möglichen Kombinationen zeigt, kann man erkennen, dass die einzelnen Buchstaben in Fig. 7 verteilt über die Tabelle liegen, und selten oder nie bei sehr ähnlichen Bitmap-Muster direkt nebeneinander. Der Grund liegt natürlich in der visuellen Unterscheidbarkeit der Bitmap-Muster. So sind ähnliche Muster für das Auge schwerer zu unterscheiden, als solche mit möglichst unterschiedlichem Wahrnehmungsmuster, womit durch eine entsprechend gewählte Verteilung der Buchstaben über alle möglichen Bitmap-Muster eine einfache und schnelle Erkennung durch das Auge erleichtert. Bei der oben erwähnten Zuordnung der Klänge und/oder Klangmuster zu den Zeilen 1,...,7 der Bitmap-Matrix 40 ist es entscheidend, dass die durch das erfindungsgemässe Verfahren erzeugten Klangrepräsentationen der möglichen Graphikmuster mittels Hörwahrnehmung für den Benutzer leicht zu unterscheiden sind. Klänge und/oder Klangmuster werden in dieser Schrift im Gegensatz zu Tönen verstanden, wobei ein Ton einer bestimmten Frequenz entsprechen soll, während Klänge und/oder Klangmuster mehrere Frequenzen und/oder Harmonien und/oder Geräuschmuster im allgemeinen umfassen können. Können bei einem Ausführungsbeispiel z.B. nur eine beschränkte Anzahl Graphikmuster auftreten, wie z.B. bei der Audioalisierung von SMS-Nachrichten (z.B. mit 26 Buchstaben und 10 Ziffern), dann sollten die durch die Zuordnung der Klänge und/oder Klangmuster zu den Zeilen 1 ,...,7 der Bitmap-Matrix 40 entstehenden Klangbilder wie erwähnt über die Hörwahrnehmung leicht zu unterscheiden sein. Wie weiter oben beschrieben, kann dies z.B. erreicht werden, indem einerseits das Klangbild in den vorkommenden Klängen und/oder Klangmustern durch die Wahl der Intervallgrösse der einzelnen Töne, durch die Harmonien, Architektur der Tonstruktur, Temperierung, der Klangstärke (Lautstärke) und Klangfarbe etc. leicht und präzise für den Benutzer zu unterscheiden sind. Andererseits kann durch eine entsprechend gewählte zeitliche Folge in den möglichen Bitmapmuster der auftretenden Graphiken die Unterscheidbarkeit für den Benutzer über die Hörwahrnehmung vereinfacht werden. In Fig. 7 der 3x3 Bitmap-Matrizen entspricht die zeitliche Folge der Klänge und/oder Klangmuster den 3 Spalten der Bitmap-Matrix 40. Kann als Ausführungsvariante keine Beschränkung der möglichen auftretenden Graphiken, wie z.B. beim Alphabet bei SMS-Nachrichten, gemacht werden, kann die Unterscheidbarkeit der Hörwahrnehmung mittels spezifischer, für eine Graphik besonders charakteristischer Elemente für den Benutzer mit dem gleichen Verfahren der Zuordnung erreicht werden. Z.B. kann für bestimmte Ausführungsvarianten die Unterscheidung von Farbunterschieden, Art und Vorkommen von geraden und/oder gebogenen Linien, Graustufen, bestimmte geometrische Formen etc. durch die genannte Zuordnung der Klänge und/oder Klangmuster verstärkt werden. Z.B. kann dies bei der Audioalisierung von Firmenlogos und/oder Bildmarken, aber auch bei anderen allgemeinen Graphiken wichtig sein.

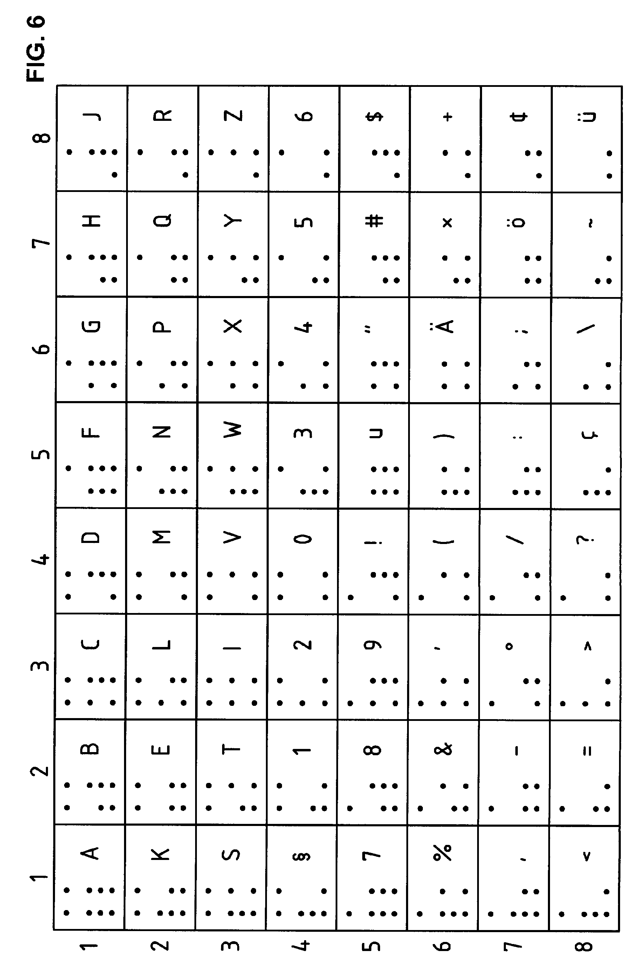

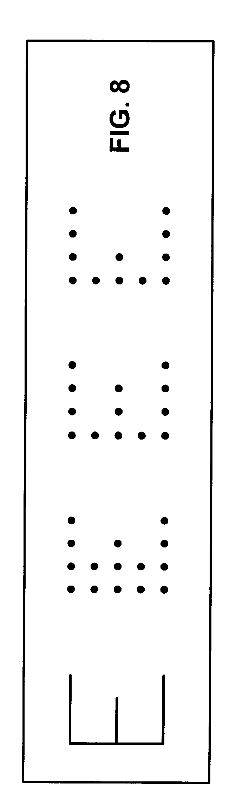

Es ist entscheidend zu verstehen, dass die vorliegende Erfindung keine Entsprechung findet durch Verfahren des Standes der Technik wie z.B. dem Morsen. Bei solchen Verfahren, insbesondere beim Morsen, werden Buchstaben und Ziffern in z.B. zweistufige Tonabfolgen umgewandelt. Der Unterschied des erfindungsgemässen Verfahrens zu herkömmlichen Verfahren der Umwandlung von z.B. Buchstaben in eine 2-stufige Tonfolge, wie beim Morsen, liegt insbesondere darin, dass eine fixe, vordefinierte und im Prinzip willkürliche Zuordnung eines Tonmuster (in diesem Fall von zwei Tönen) zum Alphabet stattfindet. Figur 6 illustriert eine solche Zuordnung wie im Stand der Technik. Bei solchen Verfahren werden bestehende Graphiken in ein vordefiniertes Tonmuster übersetzt. Der Benutzer muss das Tonmuster auf der anderen Seite wieder zurückübersetzen, um den Inhalt der übermittelten Graphik zu verstehen. Insbesondere muss er speziell geschult sein, um die kodierten Signale zu verstehen. Bei der vorliegenden Erfindung wird hingegen kein Tonmuster einer bestimmten Graphik zugewiesen, sondern es wird das topologische Erscheinungsbild in ein Klangbild umgewandelt, indem den Zeilen 1,...,7 der Bitmap-Matrizen 40 Klänge und/oder Klangmuster zugeordnet werden. Als Vorteil der vorliegenden Erfindung können damit auch bisher nicht bekannte Graphiken vom erfindungsgemässen Verfahren audioalisiert werden und von einem Benutzer erkannt werden (z.B. bei neuen Firmenlogos und/oder Bildmarken). Das System muss nicht über eine vordefinierte Tabelle oder Zuweisungen vom Benutzer gelernt werden, sondern der Benutzer lernt selbstständig über das Erkennen von Klangbildern. Beides ist mit den herkömmlichen Verfahren nicht möglich. Das erfindungsgemässe Audioalisieren entspricht mehr einer Vertonung als einer Übersetzung oder Kodierung vordefinierter Muster in eine ebenfalls vordefinierte Abfolge von Tönen (z.B. Morsen). Als weiterer Vorteil ist zu erwähnen, dass der Benutzer beim erfindungsgemässen Verfahren ähnliche Klangmuster (wie bei der visuellen Wahrnehmung) gegebenenfalls als Graphik mit gleichem Informationsursprung erkennen kann. Fig.8 illustriert dies am Beispiel des Buchstabens "E", wie der gleiche Buchstaben unterschiedlich wahrgenommen bzw. durch das erfindungsgemässe Verfahren oder System audioalisiert werden kann und trotzdem als "E" erkannt wird. Bei herkömmlichen Verfahren, wie dem erwähnten Morsen, ist die Erkennung nicht mehr möglich, wenn von der definierten Zuordnung (wie z.B. in Fig. 6) abgewichen wird. D.h. wenn die auftretende Klangfolge nicht der vorgegebenen Zuweisung oder Kodierung entspricht, existiert auch keine entsprechende Übersetzung in der Tabelle. Beim erfindungsgemässen Verfahren der Audioalisierung ist der Benutzer jedoch immer noch in der Lage, wie in Fig. 8 gezeigt, mittels der Hörwahrnehmung die Information des Klangbildes zu verstehen.

### Liste der Bezugszeichen

10 Bitmap-Matrix Elemente
20/21/22 Ausleseelemente
30 Spalten der Bitmap-Matrix
40 Bitmap-Matrix
t Zeitachse in Ausleserichtung

## Patentansprüche

1. Prozessorbasiertes Verfahren zur Audioalisierung von Graphiken **dadurch gekennzeichnet,**
**dass** basierend auf den Farben und/oder Graustufen einer Graphik eine korrespondierende Bitmap-Matrix (40) erstellt wird,
**dass** jeder Zeile (1,...,7) der Bitmap-Matrix (40) jeweils eine bestimmte Klanghöhe und/oder ein bestimmtes Klangmuster zugeordnet wird, und
**dass** die Matrixelemente (10) der Bitmap-Matrix (40) als Kombination der entsprechenden Klänge und/oder Klangmuster wiedergegeben werden, wobei die Spaltenabfolge (30) der Bitmap-Matrix ihre zeitliche Wiedergabe bestimmt.

2. Verfahren nach Anspruch 1, **dadurch gekennzeichnet, dass** ein oder mehrere Ausleseelemente (20/21/22) die zeitliche Wiedergabe der Matrixelemente (10) in der Spaltenabfolge (30) bestimmt.

3. Verfahren nach Anspruch 2, **dadurch gekennzeichnet, dass** das Ausleseelement (20/21) eine gerade Form aufweist.

4. Verfahren nach Anspruch 2, **dadurch gekennzeichnet, dass** das Ausleseelement (22) eine konkave oder konvexe Form aufweist.

5. Verfahren nach einem der Ansprüche 1 bis 4, **dadurch gekennzeichnet, dass** die Graphik Ziffern und/oder Buchstaben und/oder Symbole umfasst.

6. Verfahren nach einem der Ansprüche 1 bis 5, **dadurch gekennzeichnet, dass** die Graphik Unterschriften und/oder persönliche Erkennungsmuster umfasst.

7. Verfahren nach einem der Ansprüche 1 bis 6, **dadurch gekennzeichnet, dass** eine SMS als Graphik erfasst und audioalisiert wiedergegeben wird.

8. Verfahren nach einem der Ansprüche 1 bis 6, **dadurch gekennzeichnet, dass** ein elektronischer Fax als Graphik erfasst und audioalisiert wiedergegeben wird.

9. Verfahren nach einem der Ansprüche 1 bis 8, **dadurch gekennzeichnet, dass** zur Audioalisierung und/oder Wiedergabe der audioalisierten Graphik ein Mobilfunkgerät verwendet wird.

10. Verfahren nach einem der Ansprüche 1 bis 6 oder 9, **dadurch gekennzeichnet, dass** mittels einer Kamera und/oder Scanneinheit die Graphik erfasst wird.

11. Verfahren nach einem der Ansprüche 1 bis 10, **dadurch gekennzeichnet, dass** die Graustufen der Graphik die Klangstärke und/oder Klangfarbe bestimmen, während die Farbtöne der Graphik das Klangmuster und/oder die Klanghöhe bestimmen.

12. Verfahren nach einem der Ansprüche 1 bis 11, **dadurch gekennzeichnet, dass** die Farbtöne der Graphik die Klangstärke und/oder Klangfarbe bestimmen, während die Graustufen der Graphik das Klangmuster und/oder die Klanghöhe bestimmen.

13. Prozessorbasiertes Verfahren zur Audioalisierung von Bitmaps **dadurch gekennzeichnet,**
**dass** eine Bitmap als Bitmap-Matrix (40) erfasst und/oder erstellt wird,
**dass** jeder Zeile (1,...,7) der Bitmap-Matrix (40) jeweils eine bestimmte Klanghöhe und/oder ein bestimmtes Klangmuster zugeordnet wird, und
**dass** die Matrixelemente (10) der Bitmap-Matrix (40) als Kombination der entsprechenden Klänge und/oder Klangmuster wiedergegeben werden, wobei die Spaltenabfolge (30) der Bitmap-Matrix ihre zeitliche Wiedergabe bestimmt.

14. Prozessorbasiertes System zur Audioalisierung von Graphiken **dadurch gekennzeichnet,**
**dass** das System ein Analysemodul umfasst, mittels welchem basierend auf den Farben und/oder Graustufen der Graphik eine korrespondierende Bitmap-Matrix (40) berechenbar ist,
**dass** das System ein Speichermodul zum Speichern der Bitmap-Matrix (40) umfasst, wobei jeder Zeile (1 ,...,7) der Bitmap-Matrix (40) jeweils eine bestimmte Klanghöhe und/oder ein bestimmtes Klangmuster zugeordnet ist, und
**dass** das System eine Wiedergabeeinheit umfasst, wobei die Matrixelemente (10) der Bitmap-Matrix (40) als Kombination der entsprechenden Klänge und/oder Klangmuster wiedergebbar sind und die Spaltenabfolge (30) der Bitmap-Matrix (40) ihre zeitliche Wiedergabe bestimmt.

15. System nach Anspruch 14, **dadurch gekennzeichnet, dass** mittels eines oder mehrerer Ausleseelementen (20/21/22) die zeitliche Wiedergabe der Matrixelemente (10) in der Spaltenabfolge (30) bestimmbar ist.

16. System nach Anspruch 15, **dadurch gekennzeichnet, dass** das Ausleseelement (20/21) eine gerade Form aufweist.

17. System nach Anspruch 15, **dadurch gekennzeichnet, dass** das Ausleseelement (22) eine konkave oder konvexe Form aufweist.

18. System nach einem der Ansprüche 14 bis 17, **dadurch gekennzeichnet, dass** die Graphik Ziffern und/oder Buchstaben und/oder Symbole umfasst.

19. System nach einem der Ansprüche 14 bis 18, **dadurch gekennzeichnet, dass** die Graphik Unterschriften und/oder persönliche Erkennungsmuster umfasst.

20. System nach einem der Ansprüche 14 bis 19, **dadurch gekennzeichnet, dass** mittels eines Eingangsmoduls SMS-Messages als Graphik erfassbar und audioalisiert wiedergebbar sind.

21. System nach einem der Ansprüche 14 bis 19, **dadurch gekennzeichnet, dass** mittels eines Eingangsmoduls elektronische Faxe als Graphik erfassbar und audioalisiert wiedergebbar sind.

22. System nach einem der Ansprüche 14 bis 21, **dadurch gekennzeichnet, dass** mittels eines Mobilfunkgerätes die Graphik audioalisierbar und wiedergebbar ist.

23. System nach einem der Ansprüche 14 bis 19 oder 22, **dadurch gekennzeichnet, dass** das System eine Kamera und/oder Scanneinheit umfasst, mittels welcher die Graphik erfasst ist.

24. System nach einem der Ansprüche 14 bis 23, **dadurch gekennzeichnet, dass** mittels des Speichermoduls unterschiedliche Graustufen der Graphik unterschiedlicher Klangstärke und/oder Klangfarbe zugeordnet sind, und unterschiedliche Farbtöne der Graphik unterschiedliche Klangmuster und/oder die Klanghöhe bestimmen.

25. System nach einem der Ansprüche 14 bis 24, **dadurch gekennzeichnet, dass** die Farbtöne der Graphik die Klangstärke und/oder Klangfarbe bestimmen, während die Graustufen der Graphik das Klangmuster und/oder die Klanghöhe bestimmen.
